# EUROPEAN PATENT SPECIFICATION

(11) **EP 0 881 977 B1**
(45) Date of publication and mention of the grant of the patent: **10.10.2001**
(21) Application number: 97914470.6
(22) Date of filing: 27.03.1997
(51) Int. Cl.: B62D 6/00, B62D 6/08, B62D 101/00, B62D 119/00, B62D 153/00

(54) **CONTROLLER FOR AN ELECTRIC POWER ASSISTED STEERING SYSTEM AND AN ELECTRIC POWER ASSISTED STEERING SYSTEM**
STEUERUNG FÜR EIN ELEKTRISCH KRAFTVERSTÄRKTES LENKSYSTEM UND EIN KRAFTVERSTÄRKTES LENKSYSTEM
UNITE DE COMMANDE POUR UN SYSTEME DE DIRECTION ASSISTEE ELECTRIQUEMENT ET SYSTEME DE DIRECTION ASSISTEE ELECTRIQUEMENT

(30) Priority: 30.03.1996 GB 9606802; 24.01.1997 GB 9701466
(43) Date of publication of application: 09.12.1998
(73) Proprietor: TRW LUCAS VARITY ELECTRIC STEERING LIMITED, Wednesbury, West Midlands WS10 7SY (GB)
(72) Inventor: WILSON-JONES, Russell, Stratford-upon-Avon CV37 9EU (GB); HORTON, Steven, John, Solihull B90 2BQ (GB)
(74) Representative: Prutton, Roger
(86) International application number: GB9700873
(87) International publication number: WO9736777

(56) References cited:
- EP-A- 0 611 691
- EP-A- 0 708 010

## Description

The present invention relates to a controller for an electric power assisted steering (EPAS) system for a vehicle and to an EPAS system.

In a known EPAS system comprising a controller controlling current to an electric motor which is mechanically connected to a component of the steering system, it is known to provide overall motor current limiting. For this purpose, the motor current is compared with a reference value and in the event that the motor current exceeds the reference value, power to the motor is cut off. The means which controls the power supply to the motor is supplied with a torque signal indicative of the torque applied to the vehicle steering wheel by the driver and as is well known the overall torque required to steer a vehicle generally diminishes with increasing vehicle speed. Whilst the current limiting arrangement provides a limit to the torque assistance provided by the motor and also provides protection for the motor and the drive circuits, the torque limit may not be appropriate for all driving conditions.

EP-A-0708010, citable under A54(3) EPC in respect of the German, French, UK and Italian parts of the present Application, discloses an electric power steering apparatus in which a duty ratio upper limit is obtained on the basis of a vehicle speed and a supply voltage for a motor, and a target duty ratio is determined as a value not exceeding the duty ratio upper limit value so as to prevent excessive steering assisting force from being caused by malfunction of a driving current detecting circuit for the motor.

According to a first aspect of the present invention, there is provided a controller for an electric power assisted steering system, comprising a drive circuit and a current limiter arranged to limit the magnitude of current in accordance with a first current limit function which decreases monotonically with increasing vehicle speed, and a data processor programmed to limit the current supplied by the drive circuit in accordance with a second current limit function which decreases monotonically with increasing vehicle speed and which is less than the first current limit function at every vehicle speed.

It is thus possible to provide a controller for an electric power assisted steering system which limits the amount of current supplied to the electric motor and thereby limits the amount of torque developed by the motor.

It is also possible to ensure that the magnitude of the motor current does not exceed a predetermined value determined as a function of the vehicle speed.

Preferably, the current supplied to the electric motor is controlled by pulse width modulation.

A sensor may be arranged to measure the current supplied to the electric motor. The sensor may be arranged to measure the absolute value or the magnitude of the motor current. The sensor may be a sense resistor.

The electric motor may be of the three or more-phase star-connected brushless permanent magnet type. Alternatively, the electric motor may be of the delta-connected type, multi-phase bridge with switched reluctance motor type or the two-phase bridge type.

An over-current trip may be provided whereby the current supplied to the electric motor is monitored and a disable signal generated if the motor current magnitude exceeds a predetermined value.

Preferably, a latch is provided to maintain the disable signal until the latch is reset.

Preferably, a vehicle speed sensor is provided. The speed sensor may be a toothed wheel with a sensing element, for example a Hall-effect sensor or an optical sensor. Alternatively, the sensor may be a reed switch activated or deactivated by a rotating magnet. The speed sensor may alternatively be a variable reluctance type sensor.

Preferably, more than one speed sensor may be provided to improve the integrity of vehicle speed measurement.

The current limiter may be arranged as an electronic circuit for generating a first predetermined threshold signal and a further current limiter may be arranged as part of a microcontroller software which generates a second threshold signal. Preferably, the first threshold signal is higher than the second threshold signal.

It is thus still possible to limit the amount of unwanted assistance torque provided by the system in the event of a fault in the microcontroller.

The current limiter may comprise a memory for storing current limit data as a function of vehicle speed, a comparator for comparing the current supplied by the drive circuit to the motor with the current limit, and a circuit for loading the current limit data into the memory and for periodically examining the stored data.

Preferably the data loading circuit loads the current limit data into the memory each time power is applied to the system.

Preferably the controller comprises a safety circuit for preventing writing to the memory during normal operation of the system.

Preferably the controller comprises a data processor for periodically calculating the current limit as a function of speed. Preferably the controller comprises a current measuring arrangement for measuring the current supplied by the drive circuit to the motor.

It is thus possible to provide an arrangement which is periodically programmed, for example at the start of every vehicle journey, so as to account for sensor variations and hardware drift. Such an arrangement is immune to correction of the current limit by subsequent malfunction during the journey. Preferably the current limit and sensor configuration are stored in the memory, such as random access memory, only when the supply of current from the drive circuit to the motor is interrupted, for instance by independent means.

According to a second aspect of the invention, there is provided an electric power assisted steering system including a controller in accordance with the first aspect of the invention.

The invention will be further described, by way of example, with reference to the accompanying drawings, in which:-
Figure 1 shows a circuit which may be modified as discussed below to accord to an embodiment of the present invention;
Figure 2 shows a characteristic curve used with the circuit of Figure 1, in a device which does not accord to an embodiment of the present invention but which is described merely to further understanding of the invention;
Figure 3 shows two characteristic curves of an embodiment of the present invention;
Figure 4 shows a further circuit which does not accord to an embodiment of the present invention but which is provided merely to further understanding of the invention;
Figure 5 is a block schematic diagram of a EPAS system constituting an embodiment of the invention; and
Figure 6 is a graph of current limit threshold against vehicle speed.

Like reference numerals refer to like parts throughout the drawings.

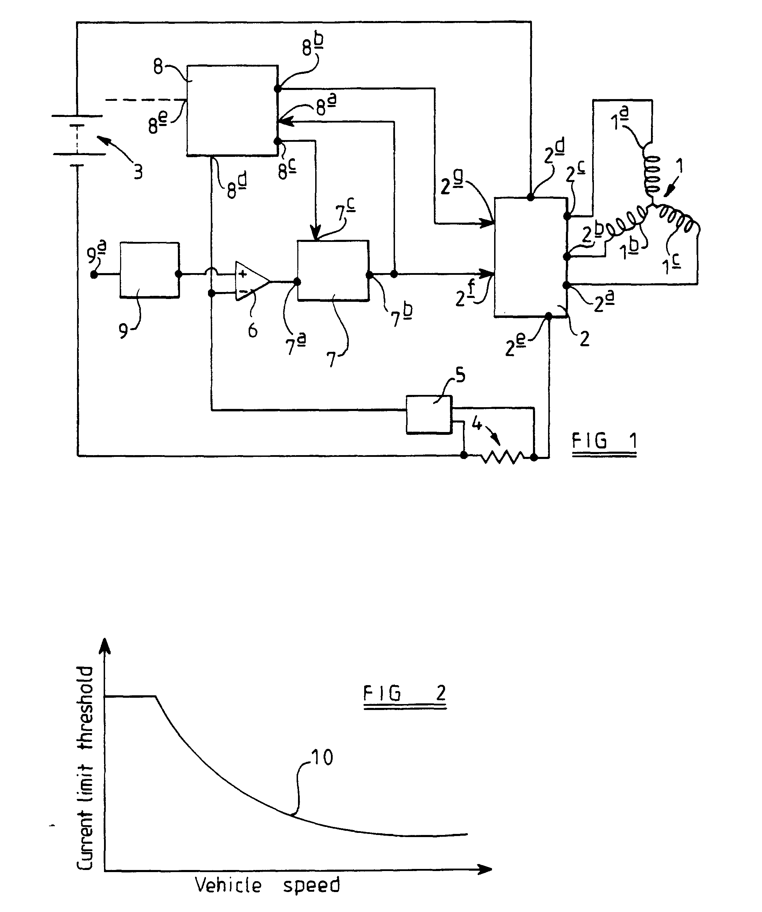

The circuit of Figure 1 comprises a three-phase star-connected coil arrangement 1 of an electric motor (not shown) which forms part of an EPAS system in a vehicle. The coil arrangement 1 has subsidiary coils 1a, 1b, 1c, each having a first terminal and a second terminal, the first terminals of the subsidiary coils 1a, 1b, 1c being connected together so as to form a three-phase star connection. It is, however, conceivable to use other coil arrangements, for example, a more than three-phase star-connection, a delta-connected arrangement, a multi-phase bridge with switched reluctance motor arrangement or a two-phase bridge arrangement. The second terminal of each subsidiary coil 1a, 1b, 1c is connected to a respective drive output terminal 2c, 2b, 2a of a driver circuit 2 comprising power devices (not shown) which are pulse width modulated and driven sequentially to drive the coil arrangement 1. The positive terminal of a power supply 3 is connected to a first power terminal 2d of the driver circuit 2 and the negative terminal of the power supply 3 is connected to a second power terminal 2e of the driver circuit 2 via a sense resistor 4.

The terminals of the sense resistor 4 are connected to a motor current measuring circuit 5 having an output terminal connected to the inverting input terminal of a differential voltage comparator 6. The inverting input terminal of the comparator 6 is connected to an output terminal of a current limit threshold generator 9 which receives a vehicle speed signal at its input terminal 9a. The output terminal of the comparator 6 is connected to an input terminal 7a of a latch circuit 7 also having a disable output terminal 7b and a reset input terminal 7c. The disable output terminal 7b of the latch circuit 7 is connected to a respective disable input terminal 2f of the driver circuit 2 and to an input terminal 8a of a microcontroller unit MCU 8. The MCU 8 also receives a torque signal which is applied to an input terminal (not shown), the torque signal being representative of the torque exerted by the driver on the vehicle steering wheel.

A set of drive output terminals 8b of the MCU 8 is connected to a set of drive input terminals 2g of the driver circuit 2. A reset output terminal 8c of the MCU 8 is connected to the reset input terminal 7c of the latch circuit 7.

During normal operation, current is supplied to the coil arrangement 1 by the driver circuit 2 via the drive output terminals 2a, 2b, 2c in response to the drive signals supplied from the drive output terminals 8b of the MCU 8. The motor current measuring circuit 5 provides a signal corresponding to the potential difference across the sense resistor 4 as an indication of the magnitude, or absolute value, of the current supplied to the motor 1 by the driver circuit 2 from the power supply 3. The circuit is arranged to operate over a range of currents that exceeds the maximum current expected in normal operation. This signal is compared by the comparator 6 with the current limit threshold signal from the output terminal 9a of the threshold generator 9.

If the magnitude of the current supplied by the driver circuit 2 exceeds the current limit threshold signal, the latch circuit 7 issues a disable signal to the driver circuit 2 and the MCU 8 in response to the output signal from the comparator 6 and the power devices in the driver circuit are turned off to isolate the motor. The disable signal is also monitored by the MCU 8 and if the MCU 8 is operating correctly a reset signal is sent from the reset output terminal 8c of the MCU 8 to the latch circuit 7 when the current supplied to the coil arrangement 1 falls below a predetermined value. For this purpose, the output signal of the measuring circuit 5 is supplied to terminal 8d of the MCU.

Referring to Figure 2, the current limit threshold generator 9 generates a threshold signal 10 which varies in response to vehicle speed, an indication of which is provided by a speed sensor (not shown), for example a Hall-effect sensor, an optical sensor, a reed switch activated or deactivated by a rotating magnet, or a variable reluctance type sensor. More than one speed sensor can be used in order to increase the integrity of the system which might be compromised by the failure of the speed sensor and in this case the current limit should be controlled in response to the output of the sensor giving the higher or highest vehicle speed. The signal 10 of Figure 2 decreases monotonically as the vehicle speed increases.

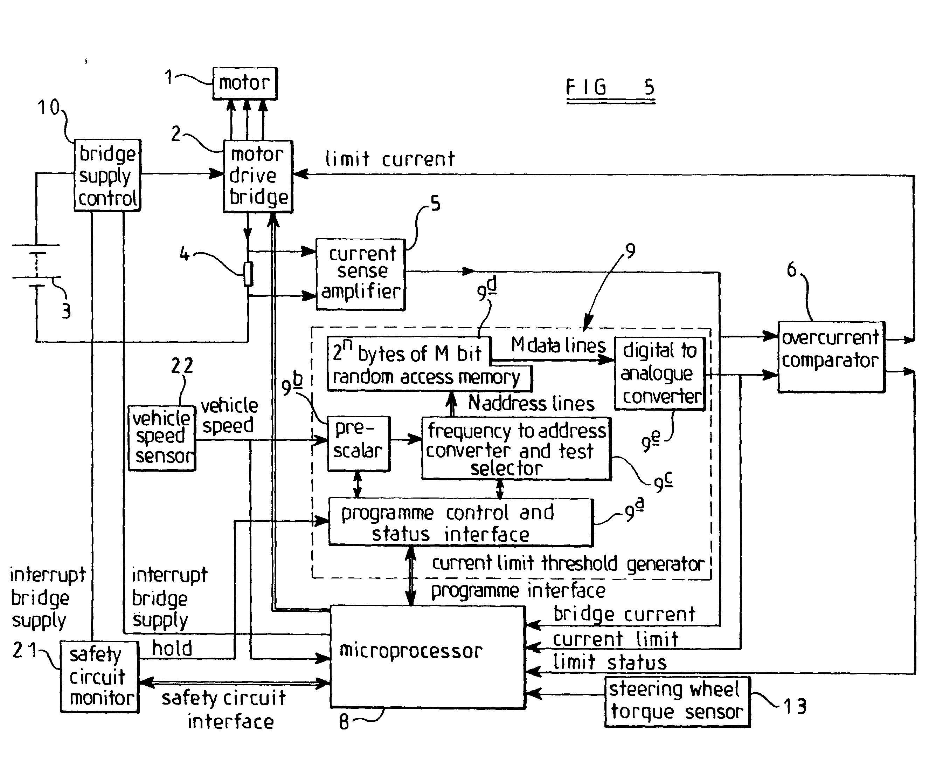

In a modified example as shown in Figure 4, the comparator 6, the latch circuit 7 and the threshold generator 9 are omitted. The output terminal of the motor current measurement circuit 5 is connected to the current sense input terminal 8d of the MCU 8, the MCU 8 also being provided with a speed sensor input terminal 8e for receiving a signal corresponding to the vehicle speed. The software of the MCU 8 limits the drive signals from the drive output terminals 8b as a function of the vehicle speed in accordance with the curve 10 of Figure 2. The current supplied to the coil arrangement 1 by the driver circuit 2 is therefore limited to a value which does not exceed a predetermined level which is a function of the vehicle speed.

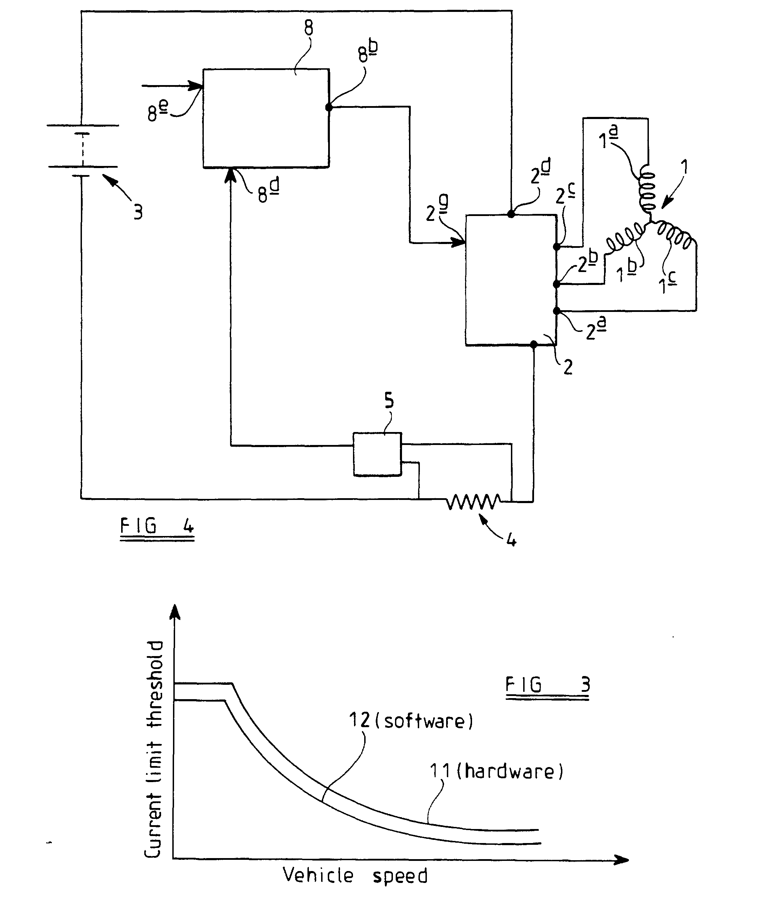

In an embodiment of the invention illustrated with reference to Figure 1, the MCU 8 is supplied with a vehicle speed signal at terminal 8e and also with the output of the current measurement circuit 5 at terminal 8d. The threshold generator 9 generates a first predetermined threshold signal 11 (Figure 3) to control the operation of the latch circuit 7 as described and the software of the MCU 8 is arranged to limit the current by limiting the drive signal from the drive output terminals 8b as a function of the vehicle speed in accordance with a second threshold signal 12. The first threshold signal is greater than the second threshold signal and in normal operation the MCU 8 will limit the motor current before the latch circuit 7 can operate. Therefore, if the MCU 8 develops a fault or the software of the MCU 8 tries to cause a large current to flow to the coil arrangement 1 at a high vehicle speed, the current would still be limited by the hardware arrangement.

The EPAS system embodying the invention and shown in Figure 5 comprises a three-phase motor 1 for providing steering power assistance connected to a motor drive bridge circuit 2. The bridge circuit 2 is connected via a bridge supply control circuit 10 to the positive terminal of a power supply 3 such as a vehicle battery and via a current sense resistor 4 to the negative terminal of the power supply 3. The output of a steering wheel torque sensor 13 is connected to an input of a microprocessor 8 having an output connected to the bridge circuit 2 for controlling motor drive current by pulse width modulation. The microprocessor 8 has an output connected to a safety circuit monitor 21 which has an output connected to the bridge supply control circuit 10. The safety circuit 21 monitors the correct operation of the microprocessor 8. Such a circuit is described in EP 0 701 207. A current sense amplifier 5 has inputs connected across the sense resistor 4 and an output for supplying to the microprocessor 8 a signal representing the current supplied by the bridge circuit 2 to the motor 1.

The controller further comprises a current limit threshold generator 9 connected to the microprocessor 8. A vehicle speed sensor 22 is connected to inputs of the generator 9 and the microprocessor 8. The safety circuit monitor 21 has an output connected to an input of the generator 9. An over-current comparator 6 has inputs connected to an output of the generator 9 and to the output of the current sense amplifier 5. The output of the generator 9 is also connected to the microprocessor 8. The comparator 6 has a first output connected to a current limit input of the bridge circuit 2 and a second limit status output connected to the microprocessor 8.

During normal operation of the EPAS system, the bridge supply control circuit 10 connects the power supply 3 to the motor drive bridge circuit 2 under control of the microprocessor 8 and the safety circuit monitor 21. The microprocessor 8 receives a vehicle speed signal from the sensor 22 and a torque signal from the sensor 13 and calculates the amount of steering assistance required. A signal representing the required steering assistance torque is supplied to the bridge circuit 2 in the form of a pulse width modulated signal so as to control the current supplied to the motor 1 in order to generate the desired assistance torque. In normal operation, the maximum amount of assistance torque demanded of the system will decrease with increasing vehicle speed.

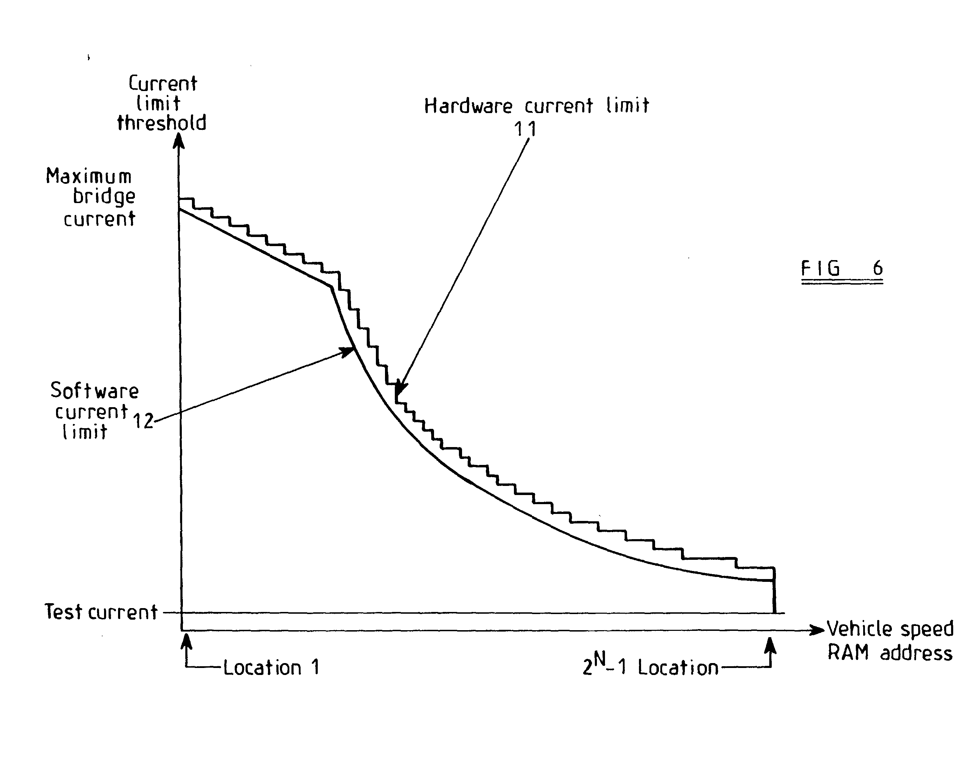

The microprocessor also calculates a software current limit as a function of vehicle speed as illustrated at 12 in Figure 6. The microprocessor compares the bridge current determined by the sense resistor 4 and the current sense amplifier 5 with the software current limit and, if the limit is exceeded, adjusts the drive signal supplied to the bridge circuit 2 to as to reduce the motor current to the limit value.

The current limit threshold generator 9 generates a hardware current limit as a function of vehicle speed as indicated at 11 in Figure 6. The over-current comparator 6 compares the threshold with the current supplied to the motor and, if the limit is exceeded, supplies a limit current signal to the bridge circuit 2 so as to reduce the motor current to the limit value at the prevailing vehicle speed.

The current limit threshold generator 9 comprises a program, control and status interface 9a connected to the microprocessor 8. The interface 9a is connected to a pre-scalar 9b and to a frequency-to-address converter and test cell selector 9c. The circuit 9c is connected to a random access memory 9d comprising 2^{N} bytes, each of which comprises M bits. The memory 9d is connected by M datalines to a digital-to-analogue converter 9e whose output supplies the hardware current limit.

At power-up and power-down, the microprocessor 8 checks the operation of the safety circuit monitor 21 prior to power assistance being provided. The safety circuit monitor 21 then monitors operation of the microprocessor and only controls the bridge supply control circuit 10 to supply power to the bridge circuit 2 when the microprocessor is responding as expected. Thus, power assistance is only permitted when the microprocessor is operating correctly and the safety circuit monitor 21 has been functionally checked.

Although the microprocessor 8 normally limits the motor current, the hardware limiting arrangement comprising the generator 9 and the comparator 6 prevents the microprocessor 8 from driving the bridge circuit 2 in such a way as to generate excessive assistance torque. During power-up, the microprocessor 8 uses its stored software current limit to generate 2^{N}-1 M bit current levels corresponding to defined vehicle speed ranges, together with a single M bit value corresponding to a specific low bridge circuit current. It is illustrated by the graph 11 in Figure 6. The resulting 2^{N} M bit bytes of data are then programmed into the memory 9d via the interface 9a. The microprocessor 8 also calculates a vehicle speed input frequency pre-scalar factor so as to adapt the generator 9 to the speed/frequency factor of the vehicle speed sensor 22. During power-up, an internal test mode causes a divided version of the internal clock signal to be output to the processor. This permits the processor to adjust the stored data to compensate for variations in the threshold generator circuit.

The microprocessor then starts to control the safety circuit monitor 21. When the safety circuit monitor 21 is under control, it removes its interruption of power supply via the bridge supply control circuit 10 and supplies a hold signal to the interface 9a. The hold signal prevents the microprocessor 8 from altering the data stored within the generator 9 i.e. in the pre-scalar 9b and in the random access memory 9d. However, the microprocessor 8 is still permitted to read the stored data for fault monitoring purposes. If control of the safety circuit monitor 21 is lost during operation, it is possible for the microprocessor 8 to corrupt the data stored within the generator. However, the loss of control also results in the safety circuit monitor 21 preventing the bridge supply control circuit 10 from supplying power to the drive circuit 2 so that power assistance is disabled and generation of erroneous assistance torque is prevented.

The varying frequency input from the vehicle speed sensor 22 is divided by the stored pre-scalar ratio in the pre-scalar 9b and converted to a random access memory address by the converter 9c. The data stored in the memory 9d at the address location are supplied to the converter 9e which converts the data to an analogue current limit value which is supplied to the comparator 6. When the current supplied to the motor exceeds the limit value, the comparator 6 supplies a signal to the bridge circuit 2 for limiting the current to the limit value or for preventing the supply of current to the motor 1 so as to limit any erroneous assistance torque. The microprocessor 8 also monitors the current limit output from the generator 9 to allow checking of the internal functioning of the generator. Thus, the microprocessor 8 can check the stored data and operation of the generator 9 and remove torque assistance if it is determining that the hardware over-current protection would not operate correctly if required.

The microprocessor is arranged to use all of the available locations in the memory 9d so as to provide the best vehicle speed resolution. Alternatively, if the current limit curve is flat at high vehicle speeds, the converter 9c may be permitted to overflow so as to give repeated selection of the current limit at the 2^{N}-1 location.

The 2^{N} location of the memory 9d stores a low current limit value which is selected by the microprocessor 8, for instance at the end of a journey, for testing the operation of the comparator 6 by checking the state of the limit status signal. Inadvertent selection of this test function during operation merely results in a low assistance torque limit being selected.

The microprocessor may be arranged to attempt to reprogram the memory 9d after the safety circuit monitor 21 is controlled so as to ensure that the hold function has not allowed the data stored in the memory 9d to be changed. If this test is performed satisfactorily, the microprocessor 8 permits power assistance to be provided.

As shown in Figure 6, the software current limit characteristic is lower than the hardware current limit characteristic at all vehicle speeds.

It is thus possible to provide a controller for an EPAS system in which the maximum magnitude of the motor current/vehicle speed characteristic is defined when the programming device such as the microprocessor 8 is itself programmed. A wide range of speed sensor characteristics can be covered without component changes so that, for instance, the same system may be used on different vehicles having different vehicle speed sensors 22. On every journey of the vehicle, the stored current limit data may be adjusted to accommodate drift in external current sense hardware. Corruption of the stored data, data selection logic and resultant current limit levels can be detected during operation. Operation of the current limit hardware can be validated before steering assistance is provided. Adaptability and reliability of the EPAS system are therefore provided.

All outputs from the current limit threshold generator and safety circuit which are monitored by the processor must be buffered to ensure correct operation in the case of a malfunctioning processor outputting signals on its inputs.

## Claims

1. A controller for an electric power assisted steering system, comprising a drive circuit (2) and a current limiter (9) arranged to limit the magnitude of current in accordance with a first current limit function (11) which decreases monotonically with increasing vehicle speed, and a data processor (8) programmed to limit the current supplied by the drive circuit (2) in accordance with a second current limit function (12) which decreases monotonically with increasing vehicle speed and which is less than the first current limit function (11) at every vehicle speed.

2. A controller as claimed in Claim 1, comprising a resettable latch (7) connected between the drive circuit (2) and the current limiter (9).

3. A controller as claimed in Claim 1, in which the current limiter (9) comprises a memory (9d) for storing current limit data as a function of vehicle speed, a comparator (6) for comparing the current supplied by the drive circuit (2) to the motor with the current limit, and a circuit (9a) for loading the current limit data into the memory and for periodically examining the stored data.

4. A controller as claimed in Claim 3, in which the data loading circuit (9a) is arranged to load the current limit data into the memory (9d) each time power is applied to the system.

5. A controller as claimed in Claim 3 or 4, comprising a safety circuit (21) for preventing writing to the memory (9d) during normal operation of the system.

6. A controller as claimed in any one of the preceding claims, comprising a data processor (8) for periodically calculating the current limit as a function of vehicle speed.

7. A controller as claimed in any one of the preceding claims, comprising a current measuring arrangement (5) for measuring the current supplied by the drive circuit (2) to the motor.

8. An electric power assisted steering system including a controller as claimed in any one of the preceding claims.

## Patentansprüche

1. Steuerung für ein elektrisches Servolenksystem, aufweisend eine Steuerschaltung (2), und einen Strombegrenzer (9), der ausgelegt ist, um die Größe des Stroms entsprechend einer ersten Stromgrenzefunktion (11), die mit zunehmender Fahrzeuggeschwindigkeit monoton abnimmt, zu begrenzen, und einen Datenprozessor (8), der programmiert ist, um den von der Steuerschaltung (2) gelieferten Strom entsprechend einer zweiten Stromgrenzefunktion (12), die mit zunehmender Fahrzeuggeschwindigkeit monoton abnimmt und die bei jeder Fahrzeuggeschwindigkeit kleiner als die erste Stromgrenzefunktion (11) ist, zu begrenzen.

2. Steuerung wie in Anspruch 1 beansprucht, aufweisend eine rückstellbare Verriegelung (7), die zwischen der Steuerschaltung (2) und dem Strombegrenzer (9) angeschlossen ist.

3. Steuerung wie in Anspruch 1 beansprucht, bei der der Strombegrenzer (9) einen Speicher (9d) zum Speichern von Stromgrenzedaten als Funktion der Fahrzeuggeschwindigkeit, einen Komparator (6) zum Vergleichen des von der Steuerschaltung (2) nach dem Motor gelieferten Stroms mit der Stromgrenze, und eine Schaltung (9a) zum Eingeben der Stromgrenzedaten in den Speicher und zum periodischen Prüfen der gespeicherten Daten aufweist.

4. Steuerung wie in Anspruch 3 beansprucht, bei der die Dateneingabeschaltung (9a) ausgelegt ist, um die Stromgrenzedaten jedes Mal, wenn Spannung an das System angelegt wird, in den Speicher (9d) einzugeben.

5. Steuerung wie in Anspruch 3 oder 4 beansprucht, aufweisend eine Sicherheitsschaltung (21) zum Verhindern der Eingabe in den Speicher (9d) während des normalen Betriebs des Systems.

6. Steuerung wie in irgendeinem der vorhergehenden Ansprüche beansprucht, aufweisend einen Datenprozessor (8) zum periodischen Berechnen der Stromgrenze als Funktion der Fahrzeuggeschwindigkeit.

7. Steuerung wie in irgendeinem der vorhergehenden Ansprüche beansprucht, aufweisend eine Strommeßanordnung (5) zum Messen des von der Steuerschaltung (2) nach dem Motor gelieferten Stroms.

8. Elektrisches Servolenksystem, umfassend eine Steuerung wie in irgendeinem der vorhergehenden Ansprüche beansprucht.

## Revendications

1. Mécanisme régulateur pour un système de direction assistée par énergie électrique, comprenant un circuit d'entraînement (2) et un limiteur de courant (9) arrangé pour limiter l'intensité du courant conformément à une première fonction de limite de courant (11) qui diminue de manière monotone au fur et à mesure que la vitesse du véhicule augmente, et un processeur de données (8) programmé pour limiter le courant alimenté par le circuit d'entraînement (2) conformément à une deuxième fonction de limite de courant (12) qui diminue de manière monotone au fur et à mesure que la vitesse du véhicule augmente et qui est inférieure à la première fonction de limite de courant (11) à chaque vitesse du véhicule.

2. Mécanisme régulateur selon la revendication 1, comprenant un verrou (7) apte à une réinitialisation relié entre le circuit d'entraînement (2) et le limiteur de courant (9).

3. Mécanisme régulateur selon la revendication 1, dans lequel le limiteur de courant (9) comprend une mémoire (9d) pour mémoriser des données de limite de courant en fonction de la vitesse du véhicule, un comparateur (6) pour comparer le courant alimenté par le circuit d'entraînement (2) au moteur avec la limite de courant, et un circuit (9a) pour charger les données de limite de courant dans la mémoire et pour analyser de manière périodique les données enregistrées.

4. Mécanisme régulateur selon la revendication 3, dans lequel le circuit de chargement de données (9a) est arrangé pour charger les données de limite de courant dans la mémoire (9d) à chaque fois que de l'énergie électrique alimente le système.

5. Mécanisme régulateur selon la revendication 3 ou 4, comprenant un circuit de sécurité (21) pour empêcher tout enregistrement dans la mémoire (9d) au cours de la marche normale du système.

6. Mécanisme régulateur selon l'une quelconque des revendications précédentes, comprenant un processeur de données (8) pour calculer de manière périodique la limite de courant en fonction de la vitesse du véhicule.

7. Mécanisme régulateur selon l'une quelconque des revendications précédentes, comprenant un arrangement de mesure du courant (5) pour mesurer le courant alimenté par le circuit d'entraînement (2) au moteur.

8. Système de direction assistée par énergie électrique englobant un mécanisme régulateur selon l'une quelconque des revendications précédentes.
